# EUROPÄISCHE PATENTSCHRIFT

(11) **EP 2 712 837 B1**
(45) Veröffentlichungstag und Bekanntmachung des Hinweises auf die Patenterteilung: **04.01.2017**
(21) Anmeldenummer: 13183291.7
(22) Anmeldetag: 06.09.2013
(51) Int. Cl.: B60K 17/16, B60K 25/00, B66C 23/44, B66C 23/40

(54) **Selbstfahrende Arbeitsmaschine**
Self-propelled work machine
Machine de travail automobile

(30) Priorität: 01.10.2012 DE 202012009418 U
(43) Veröffentlichungstag der Anmeldung: 02.04.2014
(73) Patentinhaber: Manitowoc Crane Group France SAS, 69574 Dardilly Cedex (FR)
(72) Erfinder: Stührwoldt, Dieter, 26384 Wilhelmshaven (DE)
(74) Vertreter: Schwabe - Sandmair - Marx

(56) Entgegenhaltungen:
- EP-A1- 1 090 874
- JP-A- 2012 126 464
- JP-U- H0 512 489

## Beschreibung

Die vorliegende Erfindung betrifft eine selbstfahrende Arbeitsmaschine, insbesondere einen Mobilkran, mit einem zum Verfahren der Arbeitsmaschine ausgestalteten Unterwagen, einem auf dem Unterwagen drehbar gelagerten Oberwagen, und einer Antriebseinrichtung mit einem Antriebsmotor.

Heutige Mobilkrane weisen einen Antriebsmotor auf, dessen abgegebene Leistung zum Bewegen des Mobilkrans zwischen den Einsatzorten genutzt wird. Gewöhnlicherweise sind dies Dieselmotoren, die fest am Unterwagen angeordnet sind. Um auch für den Oberwagen und die dem Oberwagen zugeordneten Aggregate Leistung bereitzustellen, ist am Oberwagen zumeist ein weiterer Dieselmotor angeordnet. Aufgrund verschärfter gesetzlicher Bestimmung hinsichtlich der Einhaltung von Achslasten und Emissionsgrenzwerten ist man in jüngster Zeit dazu übergegangen, den dem Oberwagen zugeordneten Dieselmotor durch eine hydraulische Energieübertragung zu ersetzen, welche vom Unterwagen zum Oberwagen führt, so dass der vormals rein zum Verfahren des Mobilkrans vorgesehene Antriebsmotor am Unterwagen auch Leistung für den Oberwagen bereitstellen kann. Mit solchen Systemen gehen allerdings hohe Leistungsverluste bei der Energieübertragung und nicht zuletzt Probleme aufgrund Leckagen einher.

Es ist die Aufgabe der vorliegenden Erfindung, eine selbstfahrende Arbeitsmaschine, insbesondere einen Mobilkran bereitzustellen, der oben angesprochene Probleme überwindet. Insbesondere ist es die Aufgabe der vorliegenden Erfindung, bei Einhaltung vorgegebener Achslasten und Emissionsgrenzwerte die Zuverlässigkeit und Energieeffizienz einer selbstfahrenden Arbeitsmaschine bzw. eines Mobilkrans zu erhöhen.

Diese Aufgabe wird durch den Gegenstand des Schutzanspruchs 1 gelöst. Die Unteransprüche bilden den erfindungsgemäßen Gegenstand vorteilhaft weiter.

Der Einfachheit halber soll die vorliegende Erfindung im Folgenden am Beispiel eines Mobilkrans beschrieben werden, wobei der erfindungsgemäße Gedanke selbstverständlich auf alle selbstfahrenden Arbeitsmaschinen mit einem Unterwagen und einem darauf drehbar gelagerten Oberwagen anwendbar ist, beispielsweise auf andere Hebezeuge oder Baumaschinen, insbesondere Bagger.

Der erfindungsgemäße Mobilkran umfasst einen zum Verfahren des Mobilkrans ausgestalteten Unterwagen, einen auf dem Unterwagen drehbar gelagerten Oberwagen und eine Antriebseinrichtung mit einem Antriebsmotor, wobei die Antriebseinrichtung eine zwischen Ober- und Unterwagen ausgebildete Momentenübertragung aufweist, welche dazu ausgestaltet ist, vom Antriebsmotor abgegebene Leistung in Form eines Moments zwischen Ober- und Unterwagen zu übertragen.

Mit anderen Worten weist der erfindungsgemäße Mobilkran einen Antriebsmotor auf, der sowohl den Unterwagen als auch den Oberwagen mit Leistung versorgt. Dabei ist es denkbar, dass dieser Antriebsmotor der einzige Antriebsmotor bzw. die einzige Verbrennungskraftmaschine des Mobilkrans ist, wobei ein Elektromotor als Alternative zu einer Verbrennungskraftmaschine ebenfalls vorstellbar ist. Um die vom Motor abgegebene Leistung für Aggregate zur Verfügung zu stellen, welche relativ zum Antriebsmotor nicht ortsfest gelagert sind, also im Falle eines am Unterwagen angeordneten Antriebsmotors und am Oberwagen angeordneter Aggregate bzw. im Falle eines am Oberwagen angeordneten Antriebsmotors und am Unterwagen angeordneter Aggregate, sieht die vorliegende Erfindung eine Momentenübertragung als Teil der Antriebseinrichtung des Mobilkrans vor, um vom Antriebsmotor abgegebene Leistung als Moment zwischen Oberwagen und Unterwagen zu übertragen.

Die bisher im Stand der Technik bekannte hydraulische Drehdurchführung zwischen Unter- und Oberwagen ist somit nicht mehr notwendig, so dass auch keine Leckageverluste zu befürchten sind.

Gemäß einer bevorzugten Ausführungsform der vorliegenden Erfindung ist der Antriebsmotor dem Unterwagen des Mobilkrans zugeordnet. Vielmehr kann der bei bekannten Kranen zum Verfahren des Mobilkrans vorgesehene Antriebsmotor die Aufgabe übernehmen, sowohl den Oberwagen als auch den Unterwagen mit Leistung zu versorgen.

Erfindungsgemäß wird das zwischen Ober- und Unterwagen übertragene Moment um eine sich im Bereich der Drehlagerung von Ober- und Unterwagen erstreckende Achse übertragen.

Für die Momentenübertragung kann eine Welle vorgesehen sein, die sich zwischen Ober- und Unterwagen erstreckt, so dass das zu übertragende Moment im Bereich des Unterwagens in die Welle eingeleitet und im Bereich des Oberwagens aus der Welle ausgeleitet wird oder umgekehrt.

Gemäß einer weiteren bevorzugten Ausführungsform umfasst die Momentenübertragung ein Getriebe, welches insbesondere im Bereich der Drehlagerung von Ober- und Unterwagen angeordnet ist. Besonders bevorzugt wird hier ein Winkelgetriebe, in welches motorseitig ein Moment eingeleitet und aus welchem drehlagerungsseitig ein Moment ausgeleitet wird. Eine geeignete Abtriebsdrehzahl des Getriebes kann vorteilhafterweise mittels einer entsprechenden Getriebeübersetzung erreicht werden. Der Einsatz kleiner und preiswerter anzutreibender Aggregate wie beispielsweise Hydraulikpumpen ist somit möglich.

Erfindungsgemäß gibt, dass das Getriebe bzw. Winkelgetriebe ein Moment um die Drehachse des Oberwagens oder um eine sich dazu parallel erstreckende Achse im Bereich der Drehlagerung ab.

Gemäß einer weiteren bevorzugten Ausführungsform ist das Getriebe bzw. Winkelgetriebe drehfest mit dem Oberwagen oder mit dem Unterwagen verbunden, je nach Abhängigkeit von der Übertragungsrichtung. Soll vom Getriebe ein Antriebsmoment zum Oberwagen weitergeleitet werden, muss das Getriebe folglich drehfest mit dem Unterwagen verbunden sein. Ein mit dem Oberwagen drehfest verbundenes Getriebe kann umgekehrt ein Moment in Richtung Unterwagen abgeben.

Weiter bevorzugt umfasst die Antriebseinrichtung ein Verteilergetriebe, welches im Kraftverlauf zwischen dem Antriebsmotor und dem Getriebe bzw. Winkelgetriebe angeordnet ist und welches die vom Antriebsmotor abgegebene Leistung zwischen einem für die Leistungsversorgung des Oberwagens vorgesehenen Antriebsstrang und einem für die Leistungsversorgung des Unterwagens vorgesehenen Antriebsstrang aufteilt. Besonders bevorzugt wird hierbei ein Verteilergetriebe, welches die vom Antriebsmotor abgegebene Leistung dem jeweiligen Leistungsbedarf entsprechend variabel zwischen diesen Antriebssträngen aufteilen kann, wobei insbesondere eine Sperrmöglichkeit der Antriebsstränge vorstellbar ist.

Ferner ist es denkbar, dass zumindest ein Teil der von der Leistung des Antriebsmotors anzutreibenden Elemente bzw. Aggregate am Ober- bzw. Unterwagen im Bereich der Drehlagerung von Ober- und Unterwagen, insbesondere im Bereich der Drehachse des Oberwagens angeordnet sind.

Bevorzugt wird hierbei insbesondere die Aufnahme des übertragenen Moments um die Drehachse des Oberwagens. Mit anderen Worten sind möglichst viele anzutreibenden Elemente bzw. Aggregate in einer Linie zum Winkelgetriebe und in optimaler Weise an der Drehachse des Oberwagens angeordnet. Solche anzutreibenden Elemente können beispielsweise Hydraulikpumpen des Oberwagens sein. Besonders bevorzugt nimmt somit zumindest eines, insbesondere alle anzutreibenden Elemente bzw. Aggregate ein Moment um die Drehachse des Oberwagens auf.

Gemäß weiteren bevorzugten Ausführungsformen kann die Hydraulikpumpe parallel zur Drehachse des Oberwagens im Bereich der Drehlagerung angeordnet sein. Erfindungsgemäß umfasst, dass die Momentenübertragung eine sich zwischen Ober- und Unterwagen erstreckende Welle, die nicht parallel zur Drehachse des Oberwagens verläuft.

Ferner kann das im Bereich der Drehlagerung angeordnete Getriebe eine zur Drehachse des Oberwagens parallel verlaufende Ausgangswelle umfassen, deren Drehachse insbesondere nicht auf der Drehachse des Oberwagens liegt.

Das Verteilergetriebe kann ferner so ausgestaltet sein, dass es die vom Motor abgegebene Leistung zwischen dem Antriebsstrang für den Oberwagen und dem Antriebsstrang für den Unterwagen nicht nur aufteilt/variabel aufteilt, sondern auch einen der Antriebsstränge komplett stilllegt und sozusagen zwischen dem Oberwagen-Antriebsstrang und dem Unterwagen-Antriebsstrang "umschaltet". Die gesamte vom Verteilergetriebe abgegebene Leistung wird somit einem dieser Antriebsstränge zugeführt.

Auch ist es möglich, dass die Antriebseinrichtung vom Antriebsmotor abgegebene Leistung für den Oberwagenantrieb nutzt. Auch kann zumindest ein anzutreibendes Element eine Eingangswelle aufweisen, deren Drehachse insbesondere parallel zur Drehachse des Oberwagens verläuft und/oder nicht auf der Drehachse des Oberwagens liegt.

Die vorliegende Erfindung wird in Folgendem anhand einer bevorzugten Ausführungsform und unter Bezugnahme auf die beiliegenden Figuren näher erläutert. Die vorliegende Erfindung kann alle hierin beschriebenen Merkmale einzeln sowie in jedweder sinnvollen Kombination umfassen. Es zeigt:
- Figur 1:: einen Mobilkran mit einer zwischen Ober- und Unterwagen ausgebildeten Momentenübertragung,
- Figur 2:: eine bevorzugte Ausführungsform der erfindungsgemäßen Momentenübertragung.

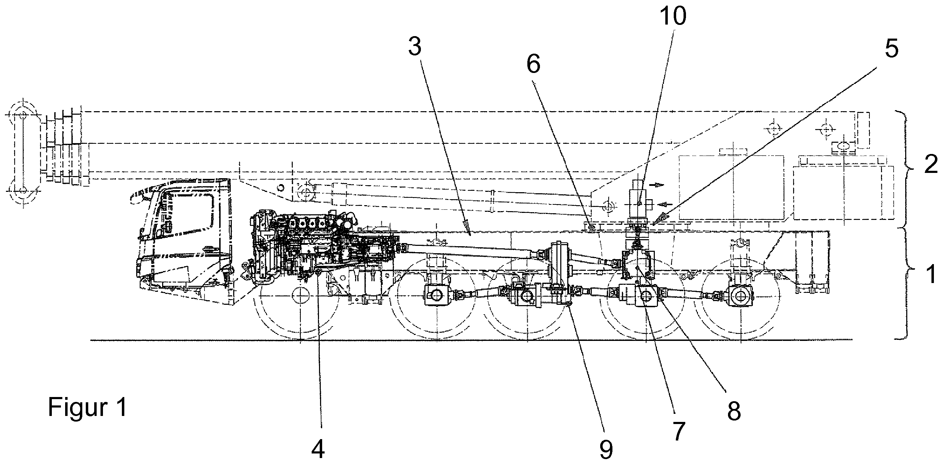

In der Figur 1 ist ein Mobilkran zu sehen, der einen Unterwagen 1, einen darauf drehbar gelagerten Oberwagen 2 und eine Antriebseinrichtung 3 aufweist. Die Antriebseinrichtung 3 umfasst einen auf dem Unterwagen 1 angeordneten Antriebsmotor 4, der über ein nicht bezeichnetes Schaltgetriebe und eine Antriebswelle Leistung an ein Verteilergetriebe 9 abgibt.

Das Verteilergetriebe 9 dient als Leistungsverzweigung und leitet über eine Welle sowohl Leistung an die Antriebsräder des Mobilkrans weiter, als auch über eine weitere Welle an ein Winkelgetriebe 8. Um dem jeweiligen Leistungsbedarf des Ober- und des Unterwagens gerecht zu werden, können die an den Ober- bzw. Unterwagen abgegebenen Leistungsanteile mittels des Verteilergetriebes 9 bis zu einer Sperrung des einen oder anderen Antriebsstrangs variiert werden.

Das Winkelgetriebe 8 ist auf der Drehachse 7 des Oberwagens 2 angeordnet und gibt um diese Achse ein Drehmoment in Richtung Oberwagen 2 ab.

Am Oberwagen 2 ist um die Drehachse 7 eine Hydraulikpumpe 10 angeordnet, welche das vom Winkelgetriebe 8 abgegebene Moment aufnimmt und den Oberwagen 2 mit hydraulischer Leistung versorgt.

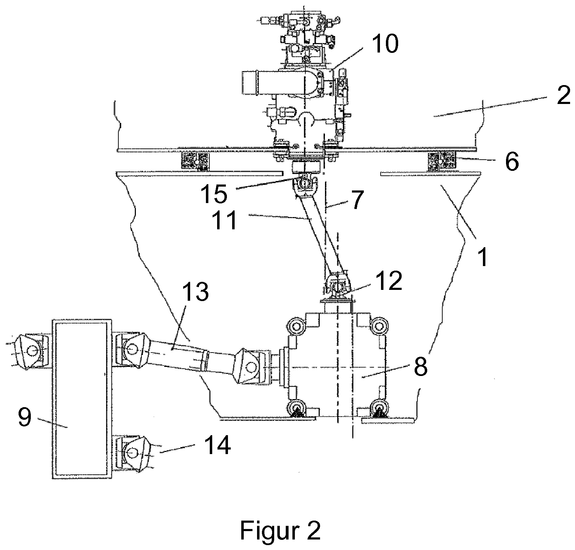

Die Figur 2 zeigt eine besonders bevorzugte Ausführungsform der erfindungsgemäßen Momentenübertragung. Die vom Antriebsmotor 4 abgegebene Leistung wird über die links im Bild gezeigte Welle dem Verteilergetriebe 9 zugeführt, welches diese Leistung je nach Bedarf auf die Antriebsstränge 13 und 14 aufteilt bzw. einen dieser Antriebsstränge vollständig abschaltet und die gesamte Leistung dem jeweils anderen Antriebsstrang zur Verfügung stellt. Während der Antriebsstrang 14 unter anderem für den Fahrzeugantrieb im Unterwagen 1 vorgesehen ist, leitet der Antriebsstrang 13 (Gelenkwelle 13) die vom Getriebe 9 abgegebene Leistung an ein weiteres Getriebe 8 weiter. Mittels diesem Getriebe wird das sich um eine im Wesentlichen horizontal verlaufende Achse (um die an die Welle 13 anschließende Eingangswelle des Getriebes 8) drehendes Moment in ein sich um eine vertikale Achse (um die der Welle 11 vorgeschaltete Ausgangswelle 12) drehendes Moment gewandelt und über die Ausgangswelle 12 abgegeben. Es ist zu sehen, dass die Drehachse der Ausgangswelle zwar parallel zur Drehachse 7 des Oberwagens 2 verläuft, jedoch nicht mit dieser zusammenfällt. Gleiches gilt für die Drehachse der Eingangswelle 15, welche der Hydraulikpumpe 10 zugeordnet ist. Zwischen der Ausgangswelle 12 des Getriebes 8 und der Eingangswelle 15 der Pumpe 10 ist eine weitere Gelenkwelle 11 vorgesehen, welche die Ausgangswelle 12 und die Eingangswelle 15 miteinander verbindet, um so Leistung in Form eines Moments vom Unterwagen 1 in den Oberwagen 2 zu transferieren. Da weder die Ausgangswelle 12 noch die Eingangswelle 15 auf der Drehachse 7 des Oberwagens 2 verlaufen, erstreckt sich die Welle 11 schräg zur Drehachse 7, liegt also weder auf der Drehachse 7 noch verläuft sie parallel zu dieser.

Sobald sich der Oberwagen 2 relativ zum Unterwagen 1 über die Drehlagerung 6 dreht, verändert sich die relative Lage der Wellen 12 und 15, so dass die Gelenkwelle 11 zur Lagekompensation längenveränderlich ausgestaltet sein kann.

## Patentansprüche

1. Selbstfahrende Arbeitsmaschine mit einem zum Verfahren der Arbeitsmaschine ausgestalteten Unterwagen (1), einem auf dem Unterwagen (1) drehbar gelagerten Oberwagen (2), und einer Antriebseinrichtung (3) mit einem Antriebsmotor (4), wobei die Antriebseinrichtung (3) eine zwischen Ober- und Unterwagen ausgebildete Momentenübertragung (5) mit einem Getriebe (8) aufweist, welche dazu ausgestaltet ist, vom Antriebsmotor (4) abgegebene Leistung in Form eines Moments zwischen Ober- und Unterwagen zu übertragen, **dadurch gekennzeichnet, dass** zumindest ein anzutreibendes Element (10) eine Eingangswelle (15) aufweist, deren Drehachse parallel zur Drehachse (7) des Oberwagens (2) verläuft, das Getriebe (8) eine zur Drehachse (7) des Oberwagens (2) parallel verlaufende Ausgangswelle (12) aufweist, und dass sich eine die Ausgangswelle (12) und die Eingangswelle (15) verbindende Welle (11) schräg zur Drehachse (7) des Oberwagens (2) erstreckt.

2. Arbeitsmaschine nach Anspruch 1, wobei eine Hydraulikpumpe, insbesondere eine Hydraulikpumpe zur Versorgung des Oberwagens ein anzutreibendes Element (10) bildet, im Speziellen mittels eines um eine parallel zur Drehachse (7) des Oberwagens (2) im Bereich der Drehlagerung (6) verlaufende Achse übertragenen Moments angetrieben wird und/oder im Bereich der Drehlagerung (6) angeordnet ist.

3. Arbeitsmaschine nach einem der Ansprüche 1 bis 2, wobei der Antriebsmotor (4) dem Unterwagen (1) zugeordnet ist und insbesondere der einzige Antriebsmotor der Arbeitsmaschine ist.

4. Arbeitsmaschine nach einem der Ansprüche 1 bis 3, wobei das Moment um eine sich im Bereich der Drehlagerung (6) von Ober- und Unterwagen erstreckende Achse übertragen wird.

5. Arbeitsmaschine nach einem der Ansprüche 1 bis 4, wobei sich die Welle (11) zwischen Ober- und Unterwagen erstreckt.

6. Arbeitsmaschine nach einem der Ansprüche 1 bis 3, wobei das Getriebe (8) im Bereich der Drehlagerung (6) von Ober- und Unterwagen angeordnet ist und/oder die Drehachse der Ausgangswelle (12) nicht auf der Drehachse (7) des Oberwagens (2) liegt.

7. Arbeitsmaschine nach Anspruch 6, wobei das Getriebe (8) ein Moment um die Drehachse (7) des Oberwagens (2) abgibt.

8. Arbeitsmaschine nach einem der Ansprüche 6 und 7, wobei das Getriebe abhängig von der Übertragungsrichtung drehfest mit dem Oberwagen (2) oder mit dem Unterwagen (1) verbunden ist.

9. Arbeitsmaschine nach einem der Ansprüche 1 bis 8, wobei die Antriebseinrichtung (3) ein Verteilergetriebe (9) umfasst, welches die vom Antriebsmotor (4) abgegebene Leistung zwischen einem für die Leistungsversorgung des Oberwagens (2) vorgesehenen Antriebsstrang (13) und einem für die Leistungsversorgung des Unterwagens vorgesehenen Antriebsstrang (14) aufteilt und/oder umschaltet, insbesondere variabel aufteilt, im Speziellen dem jeweiligen Leistungsbedarf der Antriebsstränge von Oberwagen und Unterwagen entsprechend aufteilt.

10. Arbeitsmaschine nach einem der Ansprüche 1 bis 9, wobei die Antriebseinrichtung (3) vom Antriebsmotor (4) abgegebene Leistung für den Oberwagenantrieb nutzt.

11. Arbeitsmaschine nach einem der Ansprüche 1 bis 10, wobei die Eingangswelle (15) nicht auf der Drehachse (7) des Oberwagens (2) liegt.

## Claims

1. A self-propelled work machine, comprising an undercarriage (1) configured for moving the work machine, a superstructure (2) which is rotatably mounted on the undercarriage (1), and a drive device (3) comprising a drive motor (4), wherein the drive device (3) comprises a moment transmission (5) which comprises a gearbox (8) and is formed between the superstructure and the undercarriage and configured to transmit power outputted by the drive motor (4) between the superstructure and the undercarriage in the form of a moment, **characterised in that**: at least one element (10) to be driven comprises an input shaft (15), the rotational axis of which extends parallel to the rotational axis (7) of the superstructure (2); the gearbox (8) comprises an output shaft (12) which extends parallel to the rotational axis (7) of the superstructure (2); and a shaft (11) which connects the output shaft (12) and the input shaft (15) extends obliquely with respect to the rotational axis (7) of the superstructure (2).

2. The work machine according to Claim 1, wherein a hydraulic pump, in particular a hydraulic pump for supplying the superstructure, forms an element (10) to be driven and is specifically driven by means of a moment transmitted about an axis which extends parallel to the rotational axis (7) of the superstructure (2) in the region of the rotary bearing (6) and/or is arranged in the region of the rotary bearing (6).

3. The work machine according to any one of Claims 1 to 2, wherein the drive motor (4) is assigned to the undercarriage (1) and is in particular the only drive motor of the work machine.

4. The work machine according to any one of Claims 1 to 3, wherein the moment is transmitted about an axis which extends in the region of the rotary bearing (6) of the superstructure and the undercarriage.

5. The work machine according to any one of Claims 1 to 4, wherein the shaft (11) extends between the superstructure and the undercarriage.

6. The work machine according to any one of Claims 1 to 3, wherein the gearbox (8) is arranged in the region of the rotary bearing (6) of the superstructure and the undercarriage and/or the rotational axis of the output shaft (12) does not lie on the rotational axis (7) of the superstructure (2).

7. The work machine according to Claim 6, wherein the gearbox (8) outputs a moment about the rotational axis (7) of the superstructure (2).

8. The work machine according to any one of Claims 6 and 7, wherein the gearbox is connected, rotationally fixed, to the superstructure (2) or to the undercarriage (1), depending on the direction of transmission.

9. The work machine according to any one of Claims 1 to 8, wherein the drive device (3) comprises a transfer gearbox (9) which divides and/or toggles and in particular variably divides the power outputted by the drive motor (4) between a drive train (13) provided for supplying power to the superstructure (2) and a drive train (14) provided for supplying power to the undercarriage, and specifically divides it in accordance with the respective power requirements of the drive trains of the superstructure and the undercarriage.

10. The work machine according to any one of Claims 1 to 9, wherein the drive device (3) uses power outputted by the drive motor (4) for driving the superstructure.

11. The work machine according to any one of Claims 1 to 10, wherein the input shaft (15) does not lie on the rotational axis (7) of the superstructure (2).

## Revendications

1. Machine de travail automotrice comprenant un chariot inférieur (1) configuré afin de déplacer la machine de travail, un chariot supérieur (2) monté de manière à pouvoir tourner sur le chariot inférieur (1), et un dispositif d'entraînement (3) avec un moteur d'entraînement (4), dans laquelle le dispositif d'entraînement (3) présente une transmission de couple (5) réalisée entre le chariot supérieur et le chariot inférieur, avec un mécanisme de transmission (8), qui est configuré afin de transmettre la puissance fournie par le moteur d'entraînement (4) sous la forme d'un couple entre le chariot supérieur et le chariot inférieur, **caractérisée en ce qu'**au moins un élément (10) à entraîner présente un arbre d'entrée (15), dont l'axe de rotation s'étend de manière parallèle par rapport à l'axe de rotation (7) du chariot supérieur (2), le mécanisme de transmission (8) présente un arbre de sortie (12) s'étendant de manière parallèle par rapport à l'axe de rotation (7) du chariot supérieur (2), et **en ce qu'**un arbre (11) reliant l'arbre de sortie (12) et l'arbre d'entrée (15) s'étend de manière oblique par rapport à l'axe de rotation (7) du chariot supérieur (2).

2. Machine de travail selon la revendication 1, dans laquelle une pompe hydraulique, en particulier une pompe hydraulique servant à alimenter le chariot supérieur forme un élément (10) à entraîner, elle est entraînée de manière spécifique au moyen d'un couple transmis autour d'un axe s'étendant de manière parallèle par rapport à l'axe de rotation (7) du chariot supérieur (2) dans la zone du support rotatif (6) et/ou est disposée dans la zone du support rotatif (6).

3. Machine de travail selon l'une quelconque des revendications 1 à 2, dans laquelle le moteur d'entraînement (4) est associé au chariot inférieur (1) et est en particulier l'unique moteur d'entraînement de la machine de travail.

4. Machine de travail selon l'une quelconque des revendications 1 à 3, dans laquelle le couple est transmis autour d'un axe s'étendant dans la zone du support rotatif (6) du chariot supérieur et du chariot inférieur.

5. Machine de travail selon l'une quelconque des revendications 1 à 4, dans laquelle l'arbre (11) s'étend entre le chariot supérieur et le chariot inférieur.

6. Machine de travail selon l'une quelconque des revendications 1 à 3, dans laquelle le mécanisme de transmission (8) est disposé dans la zone du support rotatif (6) du chariot supérieur et du chariot inférieur, et/ou l'axe de rotation de l'arbre de sortie (12) ne se trouve pas sur l'axe de rotation (7) du chariot supérieur (2).

7. Machine de travail selon la revendication 6, dans laquelle le mécanisme de transmission (8) délivre un couple autour de l'axe de rotation (7) du chariot supérieur (2).

8. Machine de travail selon l'une quelconque des revendications 6 et 7, dans laquelle le mécanisme de transmission est relié, en fonction de la direction de transmission, de manière solidaire en rotation au chariot supérieur (2) ou au chariot inférieur (1).

9. Machine de travail selon l'une quelconque des revendications 1 à 8, dans laquelle le dispositif d'entraînement (3) comprend un mécanisme de transmission de répartition (9), qui répartit et/ou convertit, en particulier répartit de manière variable, la puissance délivrée par le moteur d'entraînement (4) entre une chaîne cinématique (13) prévue pour l'alimentation en puissance du chariot supérieur (2) et une chaîne cinématique (14) prévue pour l'alimentation en puissance du chariot inférieur, de manière spécifique la répartit de manière à correspondre aux besoins en puissance respectifs des chaînes cinématiques du chariot supérieur et du chariot inférieur.

10. Machine de travail selon l'une quelconque des revendications 1 à 9, dans laquelle le dispositif d'entraînement (3) utilise la puissance délivrée par le moteur d'entraînement (4) pour l'entraînement du chariot supérieur.

11. Machine de travail selon l'une quelconque des revendications 1 à 10, dans laquelle l'arbre d'entrée (15) ne se trouve pas sur l'axe de rotation (7) du chariot supérieur (2).
